# EUROPEAN PATENT SPECIFICATION

(11) **EP 1 638 653 B1**
(45) Date of publication and mention of the grant of the patent: **29.06.2011**
(21) Application number: 04736619.0
(22) Date of filing: 11.06.2004
(51) Int. Cl.: A63B 71/08

(54) **ORAL APPLIANCE**
MUNDSCHUTZ
APPAREIL BUCCAL

(30) Priority: 13.06.2003 AU 2003902996; 11.08.2003 US 639149; 02.09.2003 AU 2003904753
(43) Date of publication of application: 29.03.2006
(60) Divisional application: 10192062.7
(73) Proprietor: Farrell, Christopher John, Helensvale, QLD 4210 (AU)
(72) Inventor: Farrell, Christopher John, Helensvale, QLD 4210 (AU)
(74) Representative: Hennicke, Ernst Rüdiger
(86) International application number: PCT/AU2004/000783
(87) International publication number: WO 2004/110570

(56) References cited:
- EP-A- 1 398 061
- WO-A-00/35369
- WO-A1-00/35369
- WO-A1-95/23013
- US-A- 2 192 558
- US-A- 5 082 007
- US-A- 5 339 832
- US-A- 5 406 963
- US-A- 5 855 535
- US-B1- 6 170 485
- US-B1- 6 584 978

## Description

### FIELD OF THE INVENTION

This invention relates to an oral or mouth appliance and to a method of making the appliance.

This invention relates particularly but not exclusively to an oral appliance that is a sports guard for protecting the teeth of a user in contact sports such as boxing, football, gridiron and rugby. It will therefore be convenient to hereinafter describe the invention with reference to this example application. It is to be clearly understood however that the invention is capable of broader application. For example the invention may also extend to an appliance that is an orthodontic appliance.

### BACKGROUND TO THE INVENTION

Customised sports mouthguards are known. Typically they are made by taking a mould or impression of a user's mouth and then moulding the guard from this impression to fit the specific and unique mouth of the user. While these customised guards obviously fit well in the user's mouth, it will be readily understood that this method of making sports guards is expensive as each guard is custom made to fit the user's mouth. Mass produced sports guards often do not produce a close fit and the protection that they provide is reduced as a result. This has limited their acceptance in the market place despite a clear need for an efficacious mass produced sports guard.

A further limitation of existing custom made and mass produced sports guards is that they are relatively soft and they offer only limited protection to the front teeth. If a blow strikes the front of the mouthguard, the guard tends to deform, so that the brunt of the blow is borne by the front teeth. This makes the front teeth vulnerable to being damaged or dislodged. It would be better if the force was transferred to all the teeth and particularly through to the back teeth that are particularly firmly anchored to the jaw.

EP1398061 describes an oral appliance formed from a polyethylene base member and a continuous layer of EVA mounted on the base member. This document states that these materials have the ability to flex in harmony with each other without delamination.

Clearly it would be advantageous if a guard could be devised that had the strength and rigidity to transfer the force rearwardly so that the force is spread over all the teeth and particularly the back teeth. Clearly it would also be advantageous if a guard could be devised that had the fit of a custom made guard but that was mass produced and easy to fit in a domestic environment.

It would also be advantageous if a guard could be devised that was very efficacious at dissipating the energy of an impact before it was transmitted through the jaw to the teeth and TMJ. This would reduce the potential for injury or trauma to a user. In particular it could assist in reducing damage to the teeth of a user and also the temporomandibular joint (TMJ) of a user.

It is an object of the invention to provide a sports guard that ameliorates at least some of the shortcomings of the prior art described above.

### Summary of the Invention

According to this invention there is provided an oral appliance for placing in a mouth of a user according to appended claim 1, and a method of fitting an oral appliance according to claim 34.

The appliance may be a sportsguard.

Thus the teeth engaging elements are capable of being molded to suit the teeth and jaws of a particular user by being heated above their softening point and then inserted into the mouth of the user.

The base member provides a degree of rigidity and impact resistance to the mouthguard. This assists in transferring the force of the blow across the full surface area of the guard. The shock absorbers enable at least part of the force of an impact to be substantially absorbed or dissipated by the mouthguard instead of being transmitted to the jaw, specifically the (TMJ) temporo-mandibular joints and on into the skull.

While EVA is preferred for the teeth engaging elements, any thermoplastic having a suitable softening temperature may be used. Preferably the element is malleable at a temperature below 100°C, e.g. so that it can be softened by immersion in boiling water.

The layer of thermoplastic material, e.g. EVA, may have a thickness of 1mm-4mm, preferably 1mm-3mm, e.g. about 2mm: EVA has a suitable level of pliability and formability when heated to its softening temperature.

In order to provide increased stability the continuous layer of thermoplastics material preferably substantially covers the complete surface area of the base member.

Thus the continuous layer also covers a region of the base member intermediate the upper and lower channels, e.g. the outer walls of the flanges, as well as the channels. The layer encases the base member to firmly and securely mount teeth engaging elements on the base member without delamination.

It is to be understood however that this arrangement is not essential and that the layer may be continuous without covering the entire surface area of the base member.

In this specification, the term "engaging" shall bear a broad meaning and shall not be interpreted to mean "retaining" or "latching engagement".

The shock absorption means preferably comprises one or more predesignated compressible areas associated with the base member. Conceivably the shock absorption means could also comprise compressible areas defined in the teeth engaging elements.

The shock absorbtion means may take the form of shock absorbers comprising one or more open or closed spacings, holes, voids, openings or air channels defined in the base member. These air channels may extend from an outer face of a wall of the base member through to an inner face of a wall of the base member. Thus in general the spacings may extend the full width of the associated wall of the base member from one side across to the other.

Accordingly the guard comprises not only a material based impact absorption but also an additional 'air spring' system which provides shock absorption very much like leaf springs in a motor vehicle. It yields in response to an impact and in so doing absorbs and dissipates some of the energy from the impact.

The provision of the spacings or channels provides a far greater absorption of energy than a completely solid material and the mouthguard is loaded in a progressive manner. Increasing an impact force does not lead to complete depression or collapse of the spacings or channels since the force required to compress the shock absorbers increases exponentially with deflection similar to a rising rate suspension. The shock absorption means is therefore able to absorb a considerable amount of the energy transferred by a large impact.

The open channels may have dimensions of height lying in the range of 0.5-10 mm, preferably 1.5-5mm. The open channels may have dimensions of length lying in the range of 0.5-30mm.

Preferably the shock absorption means takes the form of at least one open channel defined in each side of the generally U-shaped form of the base member in or near terminal ends and/or at least one open channel arranged in a front section of the base member.

The frontal open channel may have a length lying in the range 2-10mm, preferably 4-8mm.

Preferably the side open channels are arranged in or near the terminal ends of the generally U-shaped form of the base member and have a length of between 10-20mm.

The base member may comprise an inner flange and an outer flange interconnected by a web which together defines the channel/s.

At least some of the openings or channels may be defined in the outer flange. The openings or channels may be defined in the outer flange below the general level of the web and on the other side of the flange from the teeth engaging element for the upper arch.

The outer flange may have a skirt or extension that projects downwardly below the web and the channels or openings may be defined in the skirt or extension of the base member that is below the web.

One or more openings may also be defined in the inner flange below the general level of the web. Further the inner flange may have a skirt or extension that projects downwardly below the web and the channels or openings may be defined in the skirt or extension of the base member that is below the web.

In some forms the openings and/or channels may be defined in both the inner and outer flanges. In particular the side openings or channels may be defined in both the inner and outer flanges. Further the front channel or channels may be defined in the outer flange, eg below the web.

Each of the channels may be positioned in a lower region of the base member, eg closely spaced or adjacent to the lower edge of the base member. This positioning in the lower region of the base member assists in absorbing energy from blows transmitted in an upward direction to the guard.

The appliance may have a plurality of said channels defined in the base member along the length of the base member. For example the appliance may have at least two channels defined in each arm of the base member, apart from the frontal channels. Further the appliance may define two frontal channels positioned on either side of the mid line of the base member, closely spaced from each other.

Thus the appliance may define two frontal channels and then two further channels on each arm positioned rearwardly of the frontal channels.

The length and volume defined by the channels may decrease in a direction rearwardly from the front of the member. For example the rear channels may have a substantially smaller length than the frontal channels.

At least some of the channels may have a length that is more than twice as great as their height. Preferably at least some of the channels have a length that is more than three times their height.

The layer of thermoplastic material may define one or more openings which correspond with at least one or more of the open channels defined in the base member. Thus the thermoplastic EVA material can follow the surface of the base member in which case the openings of channels will be open to the outside air.

Optionally the layer of thermoplastic material can cover the openings of the channels to define a closed space.

Specifically the thermoplastic material or EVA may extend across the openings of the channel that are aligned with the associated wall of the base member. This then provides a substantially planar continuation of the wall of the base member and closes off the channel from the outside air. The inside of the channel is then like a sealed compartment and when the volume of the channel is decreased the pressure of the gas within the channel will be increased. This increased pressure will increase the resistance to further decreases in volume within the channel. This particular characteristic would not be at present in the embodiment in which the channels open to the outside air.

The base member may be made of a plastics material, preferably non-thermoplastic material below about 100°C, and having a degree of flexibility. Preferably the base member is substantially rigid at temperatures of 90°C-95°C.

Preferably the base member comprises polyethylene, polyurethane, polypropylene or santoprine. Most preferably the base member comprises polyethylene, eg HDPE either alone or together with one or more components.

Preferably the non thermoplastic material is polyethylene and the thermoplastic material is EVA. The EVA may be present in the range of 4-8% by weight of the base member, more preferably about 5%.

Thus the member may include, in addition to polyethylene, a material having a greater flexibility than polyethylene. The addition of EVA to the material comprising the base member improves the flexibility thereof and helps to resist its delamination from the teeth engaging elements. It also assists in improving the conformability and compatibility of the base member to the teeth engaging elements.

In one embodiment the base member has inner and outer flanges interconnected by a web which collectively define upper and lower channels within which the upper and lower rows of teeth of the user can be received, and an upper teeth engaging element is mounted over the base member in the upper channel and a lower teeth engaging element is mounted over the base member in the lower channel.

In another embodiment the base member has inner and outer flanges interconnected by a web which collectively define an upper channel within which the upper teeth can be received and a teeth engaging element is mounted over the base member within the upper channel. This guard is only mounted over the upper teeth. These upper arch sports guards are the type most commonly used for sports applications.

The base member may have a degree of flexibility to adapt to the arch size of a user. Specifically this may comprise a cut-out or recess in the outer flange that permits the spacing of opposing sides of the base member to be adjusted.

A tongue tag can be formed on the inner flange of the base member, the tongue tag being substantially centrally positioned for correctly positioning the tongue of a user during use.

Furthermore the base member may be equipped with breathing apertures defined therein for facilitating breathing by a user when wearing the appliance.

The appliance may further include locating means for correctly locating and positioning the jaws in the teeth engaging element during fitting of the oral appliance.

The locating means may comprise a brace arranged externally on the layer of thermoplastic material. The brace may be made of rubber.

According to another example useful for understanding the invention there is provided a guard for placing in the mouth of a user to perform a protective function, the guard including: a base member having a generally U-shaped form corresponding to the arch of a jaw of a user having a front region extending back via two arms to a rear end, the base member defining at least an upper channel within which the upper teeth of a user can be received; and a teeth engaging element received in each said channel that is made of a material that is able to be user moulded to fit the mouth of a user, the base member including a shock absorber for absorbing energy from an impact to the guard, the shock absorber comprising at least one side opening defined in the outer flange of each said arm and a front opening defined in the outer flange of the front region, characterized in that the openings provide compressible areas or resiliently yielding areas that are able to absorb impact shock..

In one form the guard defines only an upper said channel to fit over the upper arch of the user.

The outer flange may include a downward extension or skirt that extends down from the web in a direction away from the upper channel and the side openings may be defined in the outer flange in the extension or skirt below the web.

The shock absorber may further include further side openings defined in the inner flange.

The inner flange may also have a downward extension or skirt that extends down from the web in a direction away from the upper channel and the further side openings may be defined in the inner flange.

The front opening may also be defined in the outer flange below the web.

Preferably each of said side and front openings is elongate with the longitudinal axis of the openings being substantially parallel to the upper channel.

According to another example useful for understanding this invention there is provided an oral appliance according to the first or second aspects of the invention for placing in a characterized in that the base member is made of polyethylene with less than 10 % by weight of a thermoplastics material and the teeth engaging element mounted over the base member in each channel is made of a thermoplastics material that is able to be user conformed or user moulded to suit the individual mouth of the user.

According to yet another example useful for understanding this invention there is provided a method of manufacturing an oral appliance according to the first aspect of the invention described above, comprising the steps of molding a base member from rigid material having one or more shock absorbing spacings in a first molding step in a first mould, removing the base member from the first mould and placing it in a second mould having a larger mould cavity and molding a continuous layer of thermoplastic material onto the base member to form upper and lower teeth engaging elements capable of being customised to suit the mouth of a user, the layer encasing the base member to thereby firmly and securely mount the layer of thermoplastic material on the base member.

Preferably the layer of thermoplastic material is injection molded from EVA while it is locked in position in the second mould.

Thus, the oral appliance may be formed in a two step injection molding process. More specifically, the base member may be injection molded in a first die or mould and then when it has been formed it may be removed from the first die and locked into a second die or mould where the layer encasing the member is injection molded. Thus the teeth engaging elements surround or enclose the base member to effect attachment to the base member.

Alternately a co-injection molding process can be used where the base member and the layer of material is formed in the same mould. The second or subsequent injections follow a first injection and cover the entire base member with the layer of EVA. This process does not require removal of the base member to another die.

The invention extends to a base member wherein the layer of thermoplastic material is injection molded from EVA while it is locked in position in the second mould.

The invention also extends to a mouldable teeth engaging element being at least semi-flexible and non-thermoplastic.

### DETAILED DESCRIPTION OF THE INVENTION

An oral appliance in accordance with this invention may manifest itself in a variety of forms. It will be convenient to hereinafter provide a detailed description of several embodiments of the invention with reference to the accompanying drawings. The purpose of providing this detailed description is to instruct persons having an interest in the subject matter of the invention how to put the invention into practice. It is to be clearly understood however that the specific nature of this detailed description does not supersede the generality of the preceding statements. In the drawings:
FIG. 1 is a three dimensional view of a base member for an appliance in accordance with one embodiment which is a mouthguard with a shock absorption system;
FIG. 2 is a front view of the guard of FIG. 1;
FIG. 3 is a side elevation of the guard shown in FIG. 1 and FIG. 2;
FIG. 4 is a rear view of a base member for an appliance in accordance with another embodiment which is a mouthguard having 'air spring' shock absorbers;
FIG. 5 is a top plan view of the guard shown in FIG. 4;
FIG. 6 is a three dimensional view of an appliance that is a mouthguard in accordance with yet another embodiment having openings in the thermoplastic layer which correspond with the shock absorber openings in the base member and also showing a brace element fitted over the thermoplastic layer at the front of the appliance;
FIG. 7 is a side view of the guard shown in FIG. 6;
FIG. 8 is a rear view of the guard shown in FIGS. 6 and FIG. 7;
FIG. 9 is a rear three dimensional view of the guard shown in FIGS 6-8;
FIG. 10 is a front three dimensional view of the guard shown in FIGS 6-9;
FIG. 11 is a rear three dimensional view of an appliance that is a mouthguard in accordance with yet another embodiment of a guard having upper and lower teeth engaging elements;
FIG. 12 is a front view of the guard of FIG. 11;
FIG. 13 is a side view of the guard of FIGs. 11 and FIG. 12;
FIG. 14 is a rear three dimensional view of an appliance that is a double mouthguard in accordance with another embodiment of the invention;
FIG. 15 is a front three dimensional view of a guard that is a variation on that in FIG. 16 illustrating an extension attached to a brace, to which extension a cord is attachable for affixing the mouthguard to a face guard or a sports helmet;
FIG. 16 is a top plan view of the guard of from FIG. 15;
FIG. 17 is a bottom plan view of the guard of FIG. 15 and FIG. 16;
FIG. 18 is a rear view of the guard of FIGS. 15-17;
FIG. 19 is a side view of the guard of FIGS. 15-18;
FIG. 20 is a front view of the guard of FIGS. 15-19;

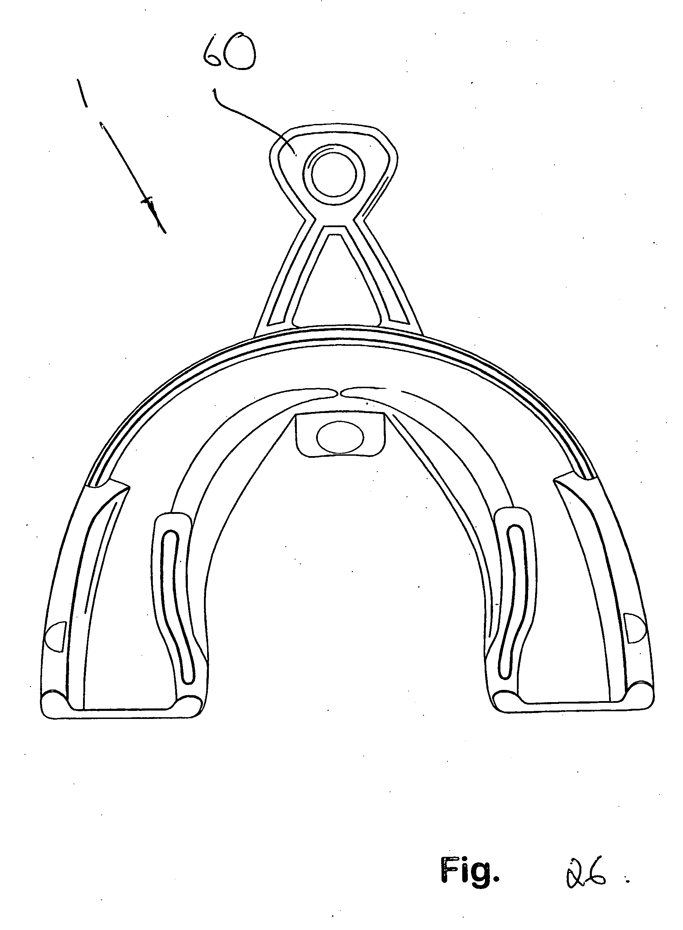

FIGS. 21-26 show yet another variation of the mouthguards of FIGS. 25 and 26; and
FIG. 27 shows a top plan view of a base member of an appliance that is a mouthguard in accordance with yet another embodiment of the invention.

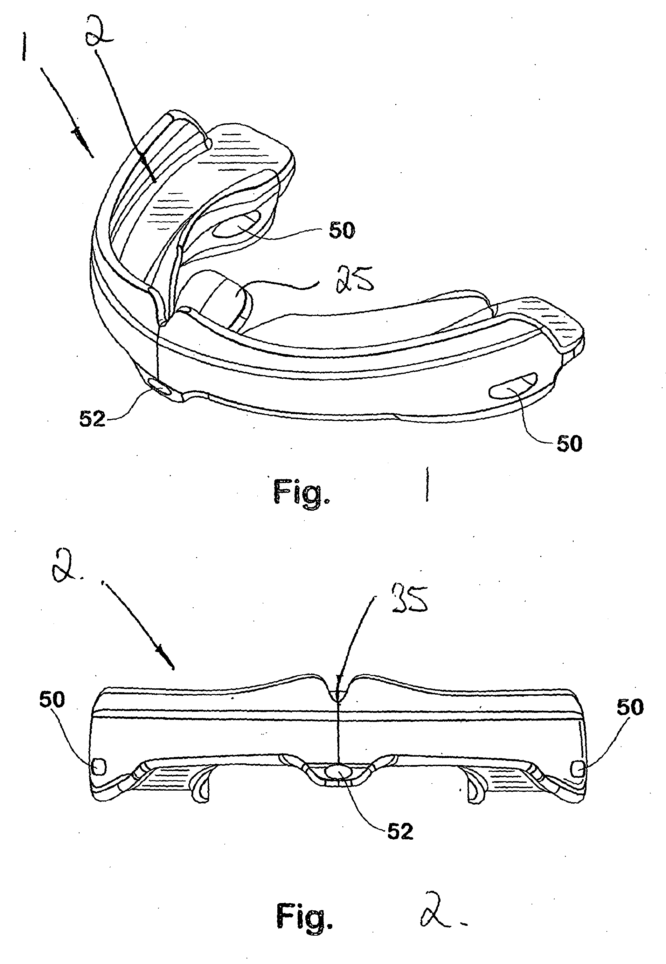

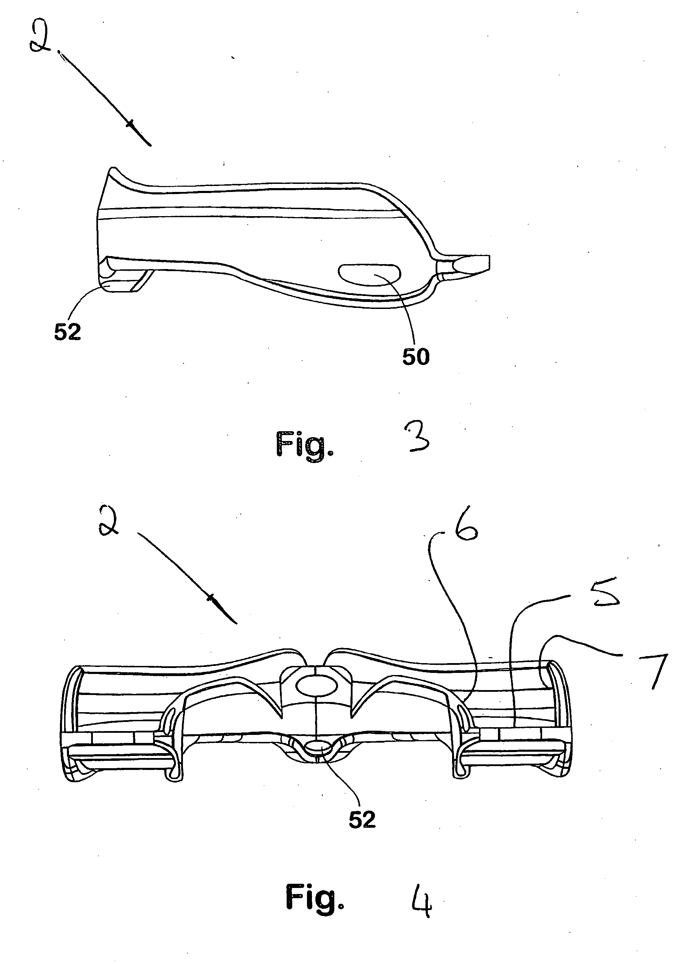

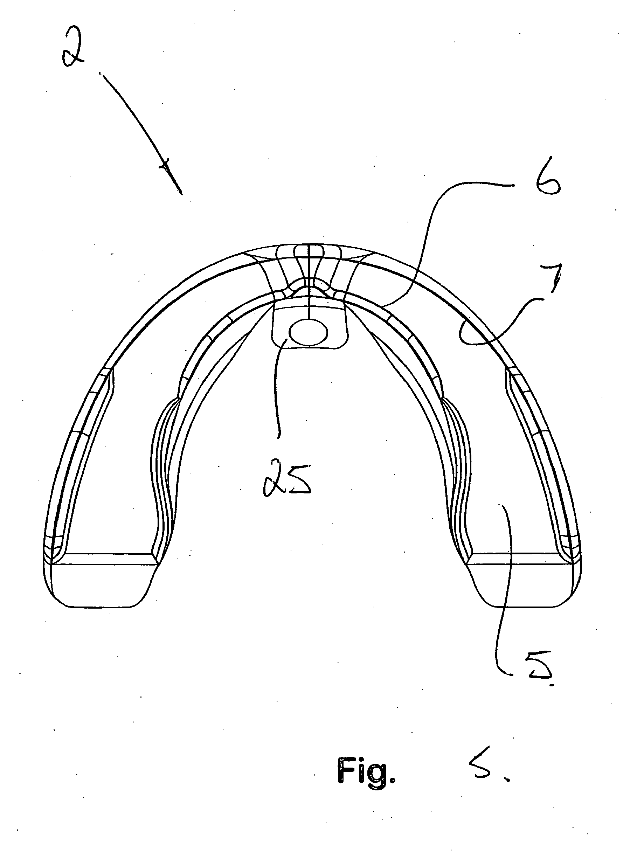

In Figs 1 to 5 reference numeral 1 refers generally to an appliance which may be a sports mouthguard in accordance with the invention.

The guard 1 comprises broadly a base member 2 that has a teeth engaging element 3 mounted on an upper surface of the member 2. This embodiment is thus a single arch guard that fits over the upper teeth.

The base member 2 has a broadly U-shaped configuration to complement the U-shape of the arch of a user. The base member 2 has a central web 5 and inner and outer flanges 6 and 7 projecting upwardly from both the inner and outer edges of the web 5. The web 5 and the flanges 6 and 7 collectively define an upper channel 10 within which the upper teeth engaging element 3 is positioned.

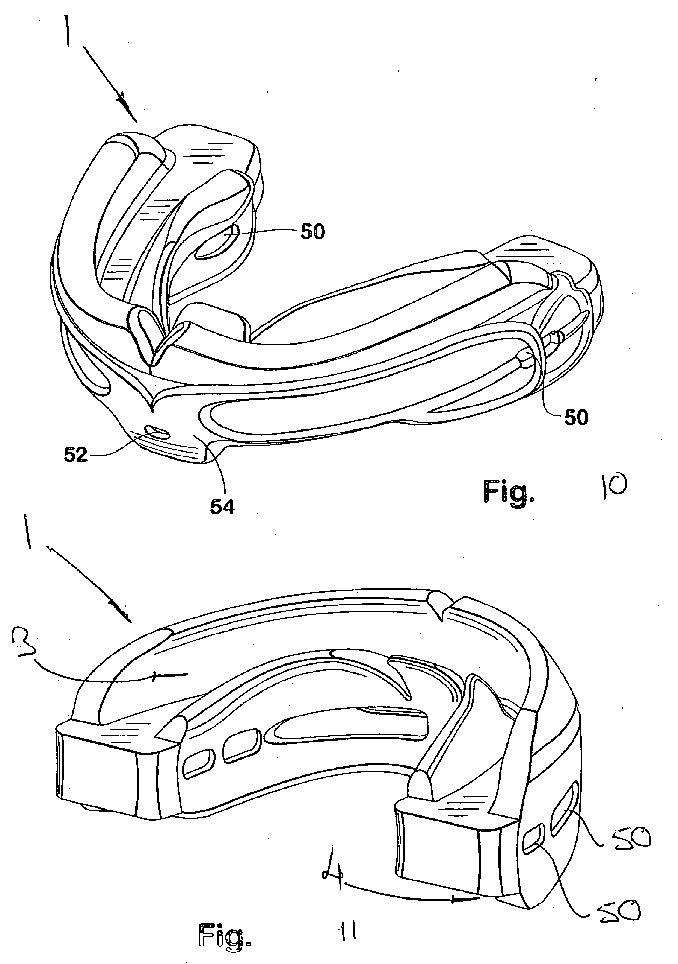

A double arch appliance is shown in Figs 10 and 11. This appliance has a further teeth engaging element 4 mounted on a lower surface of the member 2. Further with the double arch appliance the flanges 6 and 7 also depend downwardly from the inner and outer edges of the web 5. This defines the lower teeth engaging element 4 that is similar to the teeth engaging element 3..

The base member 2 is made of a substantially rigid plastics material that is mainly polyethylene which has been found to be a particular suitable material. Polyethylene has a high level of rigidity, hardness and durability while still permitting some limited flexing, ie to accommodate the different width of arches for different users. The polyethylene may be high density polyethylene (HDPE). A suitable high density polyethylene can be obtained from plastics suppliers such as Exxon Mobil Chemical Company. The material is generally supplied as a resin. The softening point of the resin is above 100 degrees Celsius.

Applicant has produced a base member from high density polyethylene without any other components mixed in with the plastics material. Thus in one form the base member is made solely from polyethylene. However Applicant has also produced a base member containing 93-97 % by weight of polyethylene and 3-7 % by weight of EVA. The EVA is blended in with polyethylene at an early stage when the plastics are still being mixed. Applicant has found that the EVA makes the base member more flexible whilst still enabling it to perform its function and confers real working advantages on the product.

Applicant has experimented with varying levels of EVA and has found that a base member with up to 10% by weight of EVA produces reasonable results. If more than 10% of EVA is contained in the base member it becomes too soft and flexible.

Each teeth engaging element 3 also has a broadly U-shaped configuration when viewed in plan view. This complements the general shape of the base member 2. Each element 3 also has a broadly U-shaped cross-sectional configuration with a bottom wall 15 and two side walls 16 and 17. The shape and width of the channels defined in the base member 2 and element 3 have been specifically designed so as to enable the guard to be capable of being fitted to a large number of patients.

The teeth engaging element 3 is formed by a layer of thermoplastics material that is EVA (ethyl vinyl acetate) that encloses and encapsulates the base member 2. The layer has a thickness of 1mm to 3mm, typically about 2mm. EVA has the property that it softens when it is heated to 90°C to 95°C. This enables it to be shaped to conform to the arch and teeth of a user as will be described in more detail below.

In the illustrated embodiments the layer of EVA extends fully across the surface area of the base member and encases the base member continuously without any interruption, ie without any gaps or spaces. The attachment of the layer of EVA to the base member is enhanced by the fact that it encases the base member continuously and extends across the full surface area of the base member. This helps to resist delamination of the two materials during of the appliance.

In addition the guard also includes a notch or cut-out 35 in the upper surface of the outer flange 7. The notch 35 has the important function of permitting inward or outward adjustment of the arms or legs of the U-shaped member without causing distortion of the appliance 10. This enables a single appliance to fit patients with different arch sizes.

The guard has a tongue tag 25 for positioning the tongue of a user in a central position during use.

A further feature of the guard is that the web of the member thickens from the front of the member to a point towards the rear of the base member just prior to the rear of the member. After this point the member starts thinning down again. This tends to fill in the space between the teeth of the upper and lower jaw. This in some respects resembles an aerofoil and thickens the member. This feature is described in detail in the applicant's earlier US Patent Nos 5,259,762 and 5,624,257, the contents of which are explicitly incorporated herein by cross reference.

The guard is injection moulded in a two-stage injection moulding process. The base member is injection moulded in a first die from polyethylene. The base member is then removed from the first die and locked into a second die in which the EVA layer is injection moulded onto the base member. The base member is held in position by locking elements which are pins. It is particularly important that the base member does not move or flex when the layer of EVA is injection moulded onto it. The base member described above has been found to fully satisfy these requirements.

The guard would generally be used in contact sports where it acts to resist damage to the teeth and jaw of a user. In particular the guard protects the vulnerable front incisor teeth and the TMJ joint of a user. It does not have a lower channel for receiving the lower teeth.

The guard also includes 'air spring' shock absorbers, for absorbing the energy of an impact to the jaw or like during a contact sport.

The guards define spacings or channels 50, in the outer flanges of the base member and a front spacing 52, arranged at the front of the appliance below the front, upper notch. These spacings 50 provide compressible areas or resiliently yielding areas that are able to absorb impact shock.

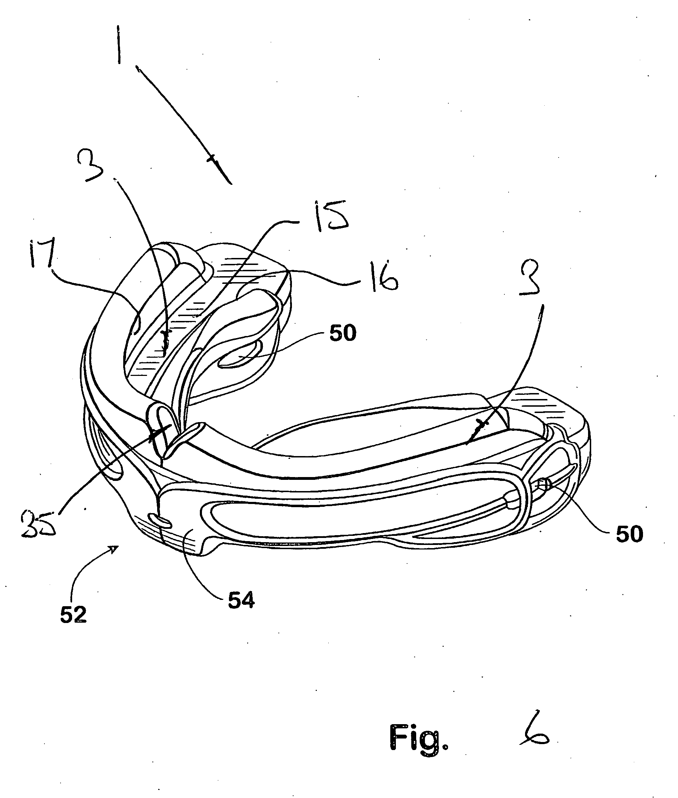

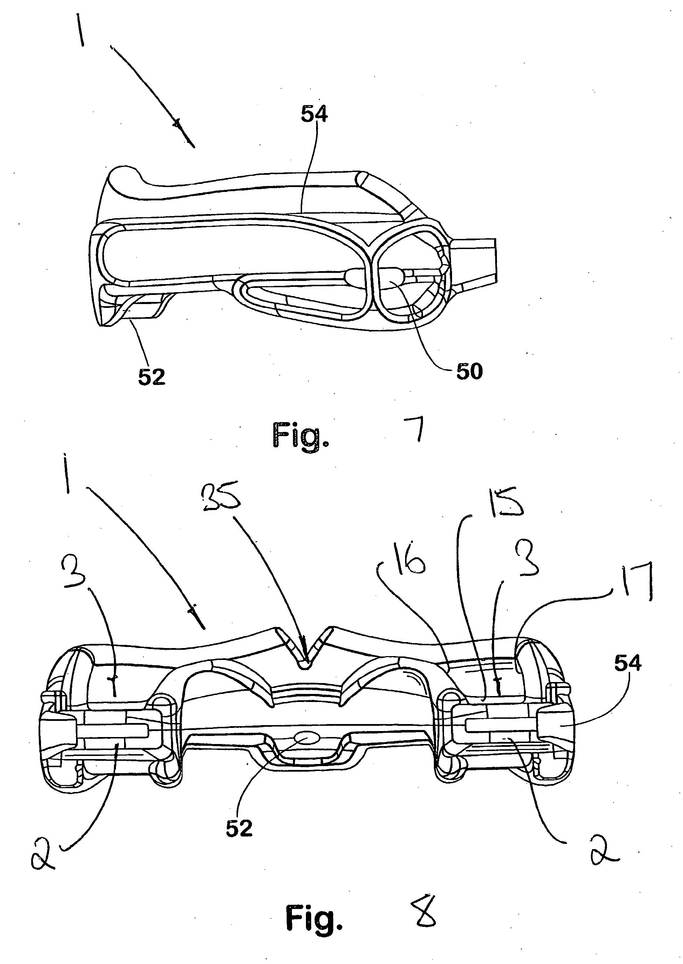

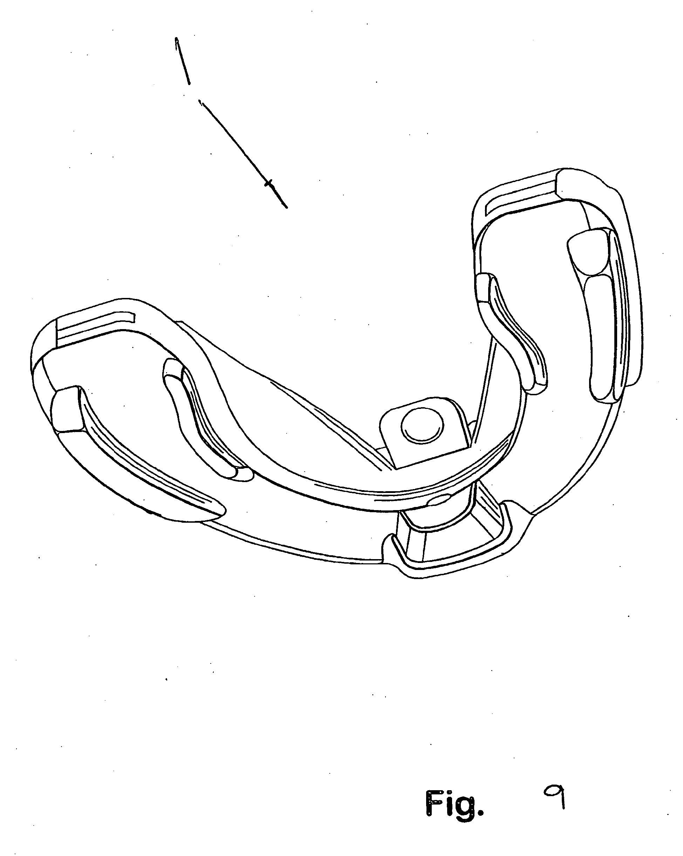

Figs 6 to 10 illustrate an embodiment that has the air springs described above and also has an additional feature of a brace 54 that is mounted over the layer of EVA extending across the outer flange. Typically the brace 54 is formed in a third moulding process as a layer of thermoplastic rubber superimposed on the layer of EVA. It thus substantially takes on the shape and form of the outer surface of the guard. The brace 54 does however project downwardly below the lower edge of the outer flange as shown in the drawings. Further it should be noted that the brace 54 is only used on an upper arch appliance where there is no channel for the lower teeth.

The function of the brace 54 is primarily to protect the lower teeth. It does this by virtue of the fact that it depends down and thereby covers over the lower teeth when fitted. The brace 54 also assists with the correct positioning of the lower jaw both during use and the initial moulding of the guard. More specifically the rear part of the brace locates and centralizes the lower jaw laterally. The front part of the brace provides a locating formation for correctly positioning the front teeth and the lower jaw by encouraging positioning of the front teeth immediately behind a leading or forwardmost portion of the brace. During initial fitting of the guard the user bites on the heated EVA and the brace optimizes the lower jaw position for the MORA effect.

The rear part of the brace 54, that is towards the rear end of the base member gives added protection from side blows by holding the lower jaw braced from lateral movement. This provides similar features to a double mouthguard but with less bulk and much more freedom of movement whilst still maintaining optimum breathing, speaking and lower front tooth and jaw protection.

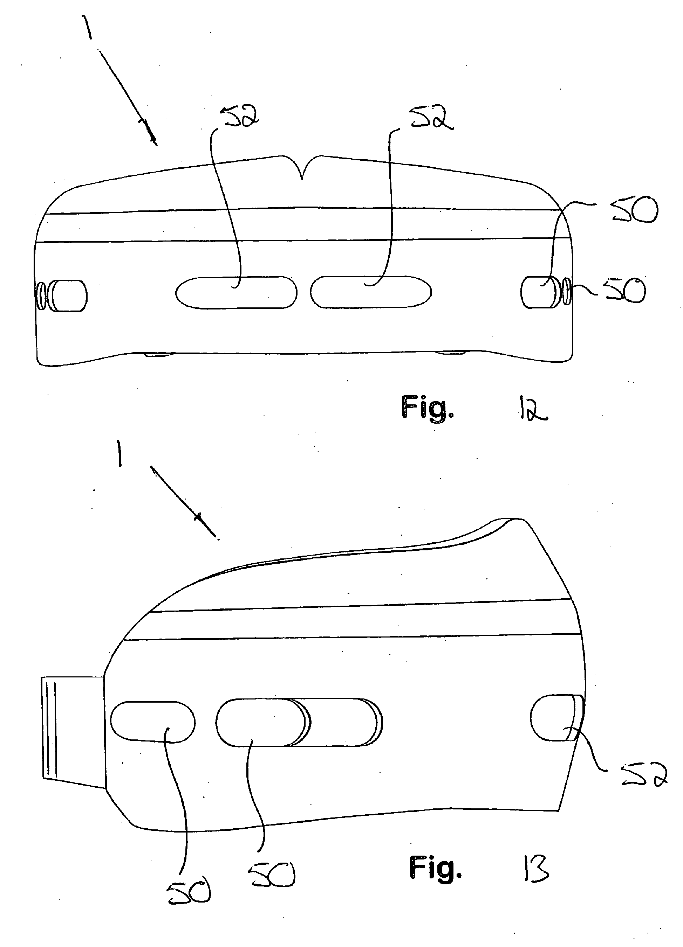

Figures 11 to 14 show preferred embodiments of a double mouth guard according to the present invention whereby the air springs extend through both the base member and the teeth engaging elements, and decrease in length from the front of the mouth guard to the rear of the mouth guard. Put another way these air springs are open to the outside.

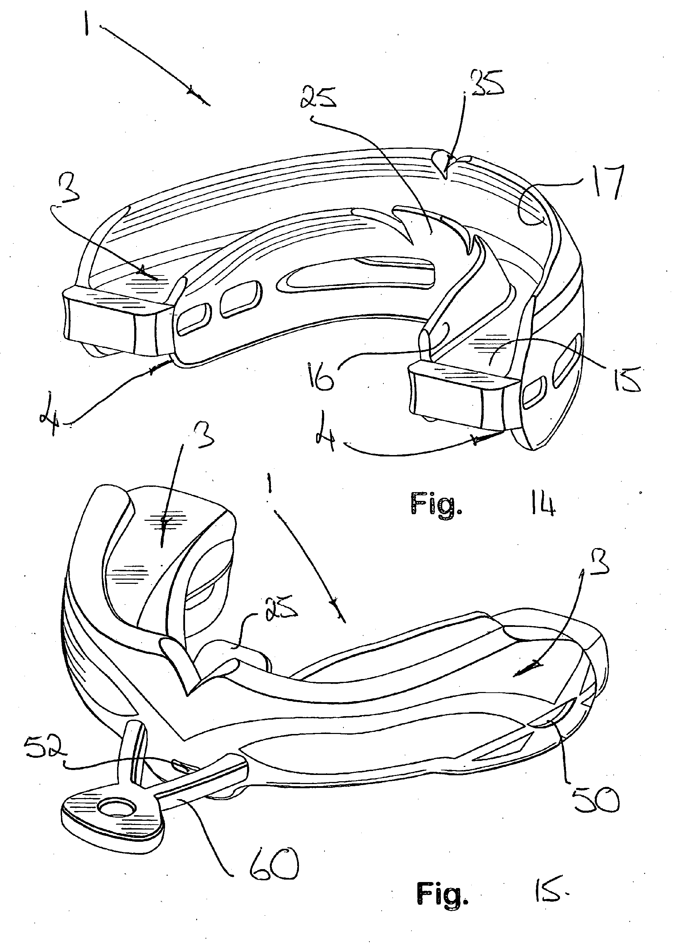

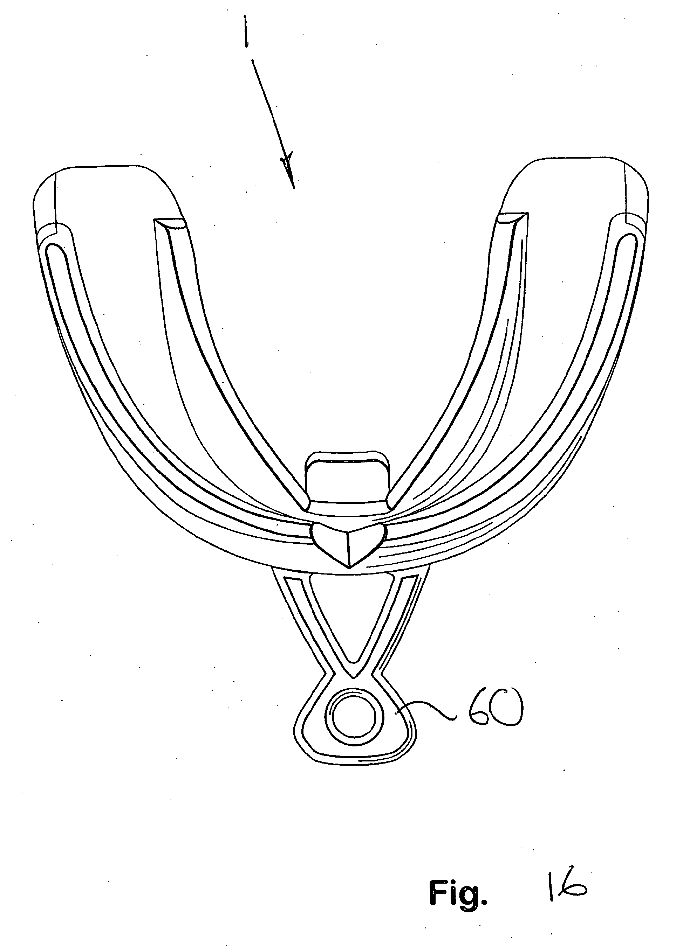

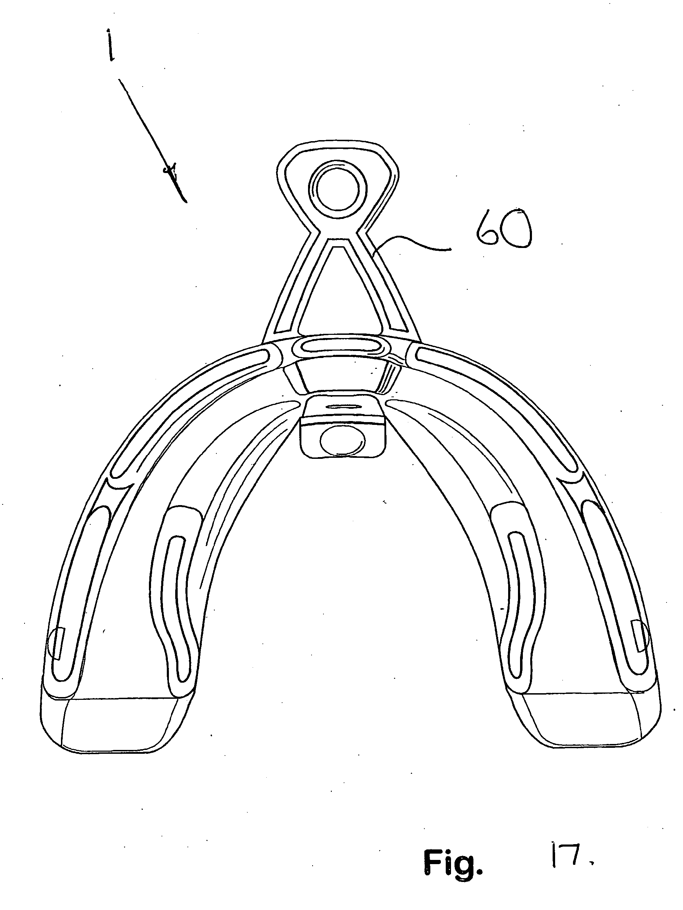

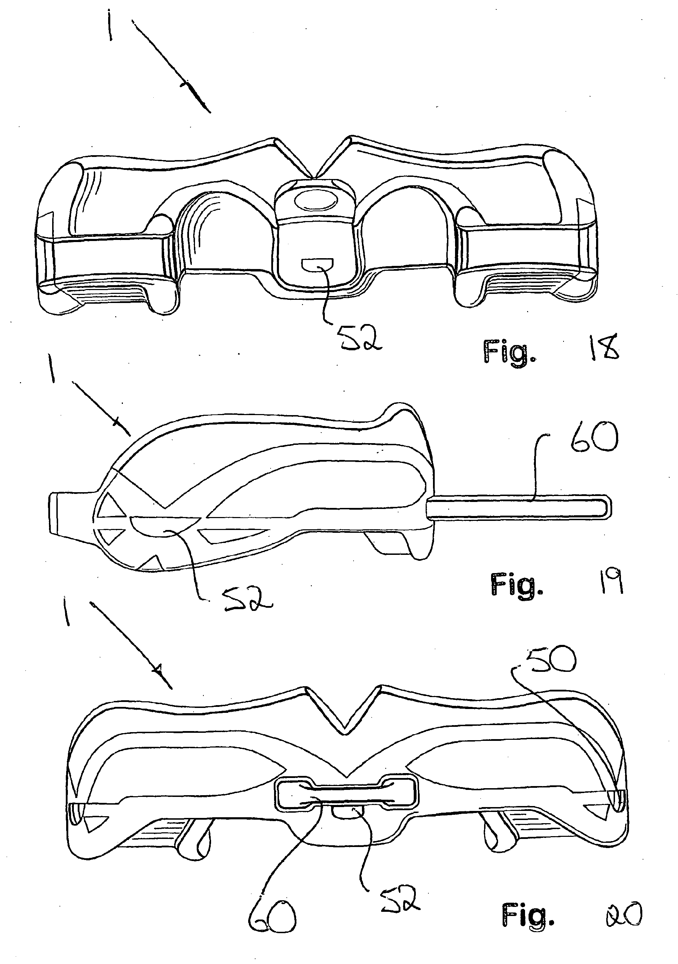

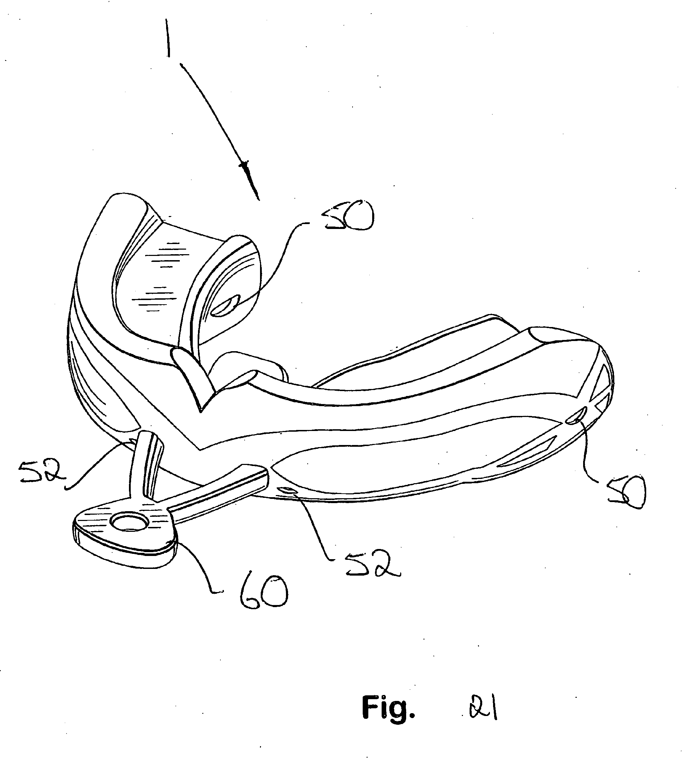

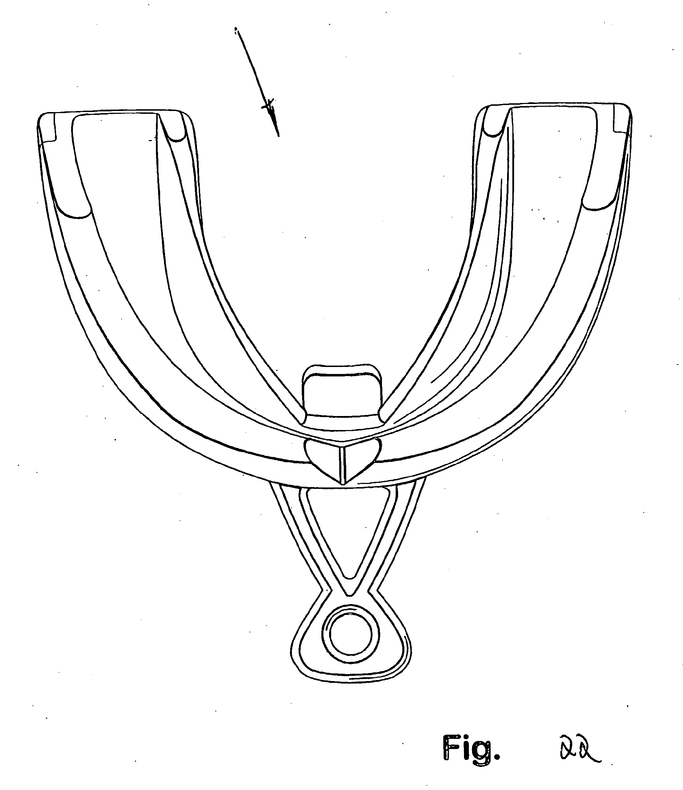

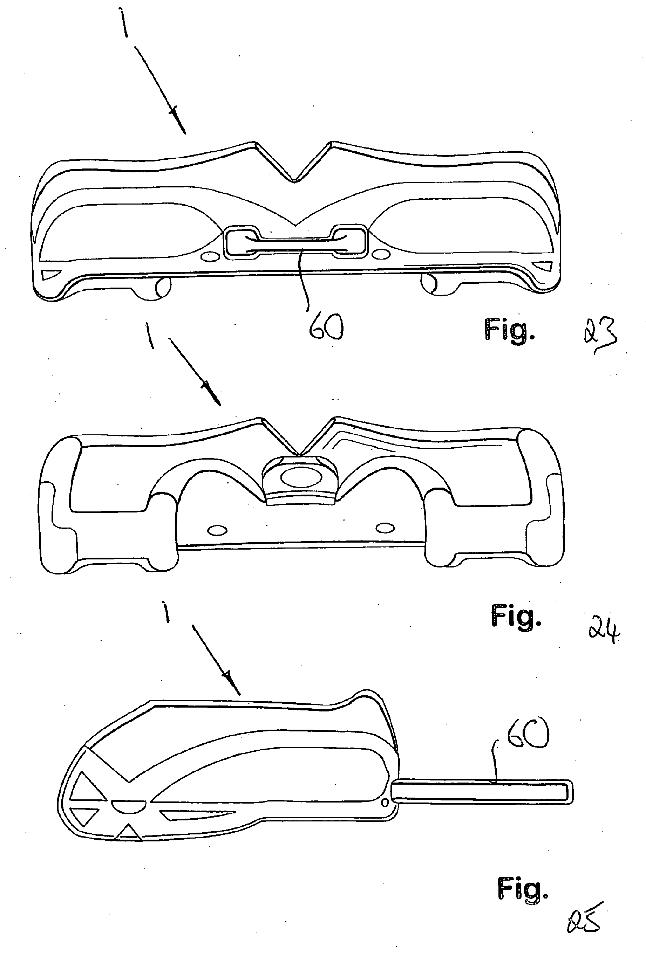

The embodiments shown in Figs 15 to 25 have a handle 60 projecting forwardly from a central region of the outer flange. This handle is used to put the guard inside the mouth and then remove it as required. This occurs in some sports such as gridiron where short spells of intense physical contact are interspersed by spells of inaction when it would be more comfortable for a user to remove the guard from their mouth. The shape of the handle can take many different forms and it is not required to have high strength. It should just be of a size and shape that enables it to be handled easily by a user.

The guards equipped with the 'spring air' shock absorbers have base members with some degree of flexibility. This is conferred by including a component other than polyethylene in the plastics material from which the base member is made as described above. More specifically the plastics material may include an amount of thermoplastics material such as EVA. Generally the plastics material would not contain more than 10 % of EVA by weight and more typically about 4 - 8% by weight. Applicant has found that the addition of this EVA increases the flexibility of the base member somewhat which is advantageous in an impact. At the same time the base member is still sufficiently rigid to hold its shape and also that of the guard overall.

In use, the sports guard 1 may easily be fitted in a domestic environment. This is done by immersing the guard in boiling water which causes the EVA to soften. Typically, this only takes a few minutes. Thereafter the guard 1 is placed in the user's mouth where it is moulded and conformed to the arch and teeth of the user's mouth. The base member remains rigid at this temperature. As it cools to body temperature in the mouth of the user it hardens around the teeth and the jaw of a user and is therefore customised to snugly fit in the mouth of a user.

Applicant has found that polyethylene and EVA base member layer are compatible with each other and do not delaminate. Further when the appliance is subjected to flexing in use the polyethylene and EVA are able to flex together and resist delamination. Without being bound by theory Applicant believes that the levels of thermal expansion of the materials are compatible with each other. Also Applicant believes that the ability of the materials to flex or stretch at their interfacing surfaces is comparable. Applicant also believes that the presence of EVA in the base member may assist the compatibility of the base member and the layer.

The layer of EVA is relatively thin so the guard is not excessively bulky in a user's mouth. This is an important feature that enables users to talk while they are wearing the guard. Talking is an important part of playing some contact sports.

An advantage of the sports guard described above is that when the guard is heated in water it does not change or lose its basic shape. This is because the base member is sufficiently strong and rigid to resist this. The hard base member forces the layer of thermoplastic material against the teeth where it conforms to the contours of the teeth. These guards which are essentially mass produced and are one size fits all produces an excellent fit that is comparable to that achieved with custom made guards produced by taking impressions of a user's mouth and jaw.

A further advantage of the guard described in this application is that it can be remoulded to maintain optimum fit should the fit become loose for any reason. The guard is simply heated again in boiling water and then returned to the mouth of the user where it is reshaped to restore optimum fit. Prior art custom made sports guards of which the applicant is aware are not able to do this.

A further advantage of the guard described above is that it has the ability to spread the force from a blow or impact to the front of the guard across the full body of the guard. It does this because the base member is sufficiently rigid not to deform locally when such an impact occurs. Rather the entire guard absorbs the impact and tends to move in response thereto. By spreading the force over the entire mouth of a user rather than the fragile front teeth, the risk of injury to the front teeth is considerably reduced. The rear molars have a number of extensive roots and are thicker and more robust than the front teeth. They are therefore better adapted to withstand a strong blow to the mouth. Many prior art sports guards do not have this ability. They tend to bend or deform locally in response to a frontal impact, transferring the force of the blow directly to the front teeth.

A further advantage of the guard described above is that the web has an aerofoil shape on each side of the arch extending from the front towards the rear of the arch. The base member has an aerofoil shape beneath the thermoplastic layer and the thermoplastic layer also has this shape. The aerofoil shaped base member fills in the space between the upper and lower teeth and provides support to the TMJ joint. Applicant believes that this feature assists in transferring the shock of a blow to the front of the jaw to all the teeth, rather than concentrating the impact at the TMJ. The rigid base member that cannot easily be deformed provides an appropriate level of support to the TMJ joint.

A yet further advantage of the guard described above is that it has the ability to absorb some of the energy of an impact. It does this by means of the air spring arrangement. The energy which is dissipated is thus not transferred through to the skull of the user and the user is less likely to suffer pain and/or injury.

The person skilled in the art will readily understand that the invention can be varied in many ways without departing from the scope of the invention as defined by the appended claims.

## Claims

1. An oral appliance (1) for placing in a mouth of a user, the appliance including:
- a base member (2) formed from a rigid plastic material that is not user conformable or mouldable in boiling water having a generally U-shaped form corresponding to the outline of a jaw of a user, the base member (2) defining at least one channel (10) within which an upper or lower row of teeth of a user can be received,
- a teeth engaging element (3,4), associated with each channel, being made of a material able to be user conformed or user moulded to suit the individual mouth of the user wherein the base member has a greater rigidity than the teeth engaging element, and;
shock absorption means which comprises one or more air channels or spacings (50) defined in the base member to provide compressible areas or resiliently yielding areas that are able to absorb impact shock,
**characterized in that** the rigid plastics material comprises a non-thermoplastic material in combination with a thermoplastic material and the thermoplastic material is 10% or less by weight of the base member.

2. Oral appliance (1) according to claim 1, **characterized in that** the shock absorption means comprises one or more open air channels defined in the base member.

3. Oral appliance (1) according to claim 1, **characterized in that** the air channels extend from an outer face of the base member, through the body thereof to an inner face of the base member.

4. Oral appliance (1) according to claim 3, **characterized in that** the channels have open sides and are arranged in or near terminal ends of the generally U shaped form of the base member (2).

5. Oral appliance (1) according to claim 4, **characterized in that** it further includes at least one frontal open channel (52) arranged in a front section of the base member (2).

6. Oral appliance (1) according to claim 4, **characterized in that** the side open channels (50) have a height in the range of 0.5-10mm and length lying in the range of 0.5-30mm.

7. Oral appliance (1) according to claim 6, **characterized in that** the side open channels (50) that are positioned proximate to the terminal ends of the generally U shaped form of the base member have a length lying in the range 10-20mm.

8. Oral appliance according to claim 5, **characterized in that** the frontal open channel (52) of the base member has a length lying in the range 2-10mm.

9. Oral appliance (1) according to claim 1, **characterized in that** the teeth engaging element (3, 4) is made of a continuous layer of thermoplastic material that encapsulates the base member (2) to firmly and securely mount the layer of thermoplastic material on the base member (2).

10. Oral appliance (1) according to claim 9, **characterized in that** the continuous layer of thermoplastics material substantially covers the complete surface area of the base member (2).

11. Oral appliance (1) according to claim 9, **characterized in that** the layer of thermoplastic material defines one or more openings which correspond with at least one or more of the air channels defined in the base member.

12. Oral appliance (1) according to claim 9, **characterized in that** the layer of thermoplastic material extends across and covers the one or more openings which correspond with the at least one or more channels arranged in the base member and closes off the interior space defined by the channels.

13. Oral appliance (1) according to claim 9, **characterized in that** the layer of thermoplastic material is EVA (ethylvinylacetate) which softens at a temperature of 90°C - 95°C.

14. Oral appliance (1) according to claim 9, **characterized in that** the layer of thermoplastic material forming the teeth engaging elements(3,4) has a thickness of 1mm - 3mm.

15. Oral appliance (1) according to claim 1, **characterized in that** the non-thermoplastic material comprises polyethylene, polyurethane, polypropylene or santoprine.

16. Oral appliance (1) according to claim 1, **characterized in that** the base member (2) comprises 3-8% by weight of thermoplastic material that is EVA and the balance is polyethylene.

17. Oral appliance (1) according to claim 1, **characterized in that** the base member (2) comprises 4-6% by weight of thermoplastic material that is EVA and the balance is polyethylene.

18. Oral appliance (1) according to claim 1, **characterized in that** the non-thermoplastic material comprises polyethylene on its own.

19. Oral appliance according to (1) claim 1 **characterized in that** the base member (2) has inner (6) and outer flanges (7) interconnected by a web (5) which collectively define upper and lower channels within which the upper and lower rows of teeth of the user are receivable, wherein an upper teeth engaging element (3) is receivable in the upper channel and a lower teeth engaging element (4) is receivable in the lower channel.

20. Oral appliance (1) according to claim 1 **characterized in that** it further includes a tongue tag (25) on the inner flange (6) of the base member, the tongue tag (25) being substantially centrally positioned for correctly positioning the tongue of a user during use, and a cut-out (35) defined in the outer flange (7) of the base member (2) for allowing the appliance (1) to adapt to varying arch sizes, and breathing apertures defined in the base member (2) for facilitating breathing by a user when wearing the appliance.

21. Oral appliance (1) according to claim 1 **characterized in that** it further includes locating means for correctly locating and positioning the jaws in the teeth engaging element (3, 4) during fitting of the oral appliance.

22. Oral appliance (1) according to claim 21, **characterized in that** the locating means comprises a brace (54) arranged externally on the teeth engaging element (3,4).

23. Oral appliance according to claim 22, **characterized in that** the brace (54) comprises rubber.

24. Oral appliance (1) according to claim 1, **characterized in that** the base member (2) is made of polyethylene with less than 10 % by weight of a thermoplastics material and the teeth engaging element (3,4) is made of a thermoplastics material.

25. Oral appliance (1) according to claim 24, **characterized in that** the base member (2) is made of polyethylene with 3-8% by weight of thermoplastics material.

26. Oral appliance (1) according to claim 25, **characterized in that** the base member (2) is made of polyethylene with 4-6% by weight of thermoplastics material.

27. Oral appliance (1) according to claim 1, **characterized in that** the base member (2) is made of high density polyethylene with 4-6% by weight of thermoplastics material which is EVA and each teeth engaging element (3,4) is made of EVA.

28. Oral appliance (1) according to claim 1, **characterized in that** the base member (2) defines only an upper channel within which upper teeth of a user are received.

29. Oral appliance (1) according to claim 1 in the form of a guard for placing in the mouth of a user to perform a protective function, **characterized in that** the base member (2) comprises an inner flange (6) and an outer flange (7) interconnected by a web (5) that together defines the at least upper channel within which the upper jaw of a user can be received with a front region extending back via two arms to a rear end and the shock absorption means comprising at least one side opening (50) defined in the outer flange of each said arm and a front opening (52) defined in the outer flange of the front region.

30. Oral appliance (1) according to claim 29, **characterized in that** the base member (2) defines only an upper said channel to fit over the upper arch of the user.

31. Oral appliance (1) according to claim 29, **characterized in that** the outer flange (7) includes a downward extension or skirt that extends down from the web (5) in a direction away from the upper channel and the side openings (50) are defined in the outer flange in the flange or skirt below the web.

32. Oral appliance (1) according to claim 29, **characterized in that** the front opening (52) is also defined in the outer flange (7) below the web (5).

33. Oral appliance (1) according to claim 29, wherein each of said side (50) and front openings (52) is elongate with the longitudinal axis of the opening being substantially parallel to the upper channel.

34. A method of fitting an oral appliance, as described in claim 1 comprising the step of immersing the oral appliance in water having a temperature sufficiently high to make the teeth engaging element moldable,
- inserting the appliance into a user's mouth;
- biting into the teeth engaging element to mould the teeth engaging element to the form of the user's jaw, and thereafter allowing the teeth engaging element to harden.

## Patentansprüche

1. Orales Instrument (1) für die Anordnung im Mund eines Benutzers, wobei das Instrument enthält:
- ein Basiselement (2), das aus einem Hartkunststoff gebildet ist, der sich nicht an den Benutzer anpasst oder in kochendem Wasser formbar ist und eine im Allgemeinen U-förmige Gestalt besitzt, die dem äußeren Umriss eines Kiefers eines Benutzers entspricht, wobei das Basiselement (2) wenigstens einen Kanal (10) definiert, in dem eine obere oder eine untere Reihe von Zähnen eines Benutzers aufgenommen werden kann,
- ein Zahneingriffelement (3, 4), das jedem Kanal zugeordnet ist und aus einem Material hergestellt ist, das sich an den Benutzer anpassen kann oder durch den Benutzer geformt werden kann, um sich an den jeweiligen Mund des Benutzers anzupassen, wobei das Basiselement eine größere Steifigkeit als das Zahneingriffelement besitzt, und
- Stoßabsorptionsmittel, die einen oder mehrere Luftkanäle oder -zwischenräume (50) aufweisen, die im Basiselement definiert sind, um komprimierbare Bereiche oder elastisch nachgebende Bereiche zu schaffen, die einen einwirkenden Stoß absorbieren können,
**dadurch gekennzeichnet, dass** der Hartkunststoff ein nicht thermoplastisches Material in Kombination mit einem thermoplastischen Material enthält und das thermoplastische Material 10 Gew.-% oder weniger des Basiselements ausmacht.

2. Orales Instrument (1) nach Anspruch 1, **dadurch gekennzeichnet, dass** die Stoßabsorptionsmittel einen oder mehrere Luftkanäle enthalten, die in dem Basiselement definiert sind.

3. Orales Instrument (1) nach Anspruch 1, **dadurch gekennzeichnet, dass** sich die Luftkanäle von einer Außenseite des Basiselements durch dessen Körper zu einer Innenseite des Basiselements erstrecken.

4. Orales Instrument (1) nach Anspruch 3, **dadurch gekennzeichnet, dass** die Kanäle offene Seiten besitzen und in abschließenden Enden oder in deren Nähe der im Allgemeinen U-förmigen Gestalt des Basiselements (2) angeordnet sind.

5. Orales Instrument (1) nach Anspruch 4, **dadurch gekennzeichnet, dass** es ferner wenigstens einen vorderen offenen Kanal (52) aufweist, der in einem vorderen Abschnitt des Basiselements (2) angeordnet ist.

6. Orales Instrument (1) nach Anspruch 4, **dadurch gekennzeichnet, dass** die seitlich offenen Kanäle (50) eine Höhe im Bereich von 0,5 bis 10 mm und eine Länge, die in einem Bereich von 0,5 bis 30 mm liegt, besitzen.

7. Orales Instrument (1) nach Anspruch 6, **dadurch gekennzeichnet, dass** die seitlich offenen Kanäle (50), die in der Nähe der Abschlussenden der im Allgemeinen U-förmigen Gestalt des Basiselements positioniert sind, eine Länge besitzen, die im Bereich von 10 bis 20 mm liegt.

8. Orales Instrument nach Anspruch 5, **dadurch gekennzeichnet, dass** der vorn offene Kanal (52) des Basiselements eine Länge besitzt die im Bereich von 2 bis 10 mm liegt.

9. Orales Instrument (1) nach Anspruch 1, **dadurch gekennzeichnet, dass** das Zahneingriffelement (3, 4) aus einer ununterbrochenen Schicht aus thermoplastischem Material hergestellt ist, die das Basiselement (2) einkapselt, um die Schicht aus thermoplastischem Material an dem Basiselement (2) fest und sicher anzubringen.

10. Orales Instrument (1) nach Anspruch 9, **dadurch gekennzeichnet, dass** die ununterbrochene Schicht aus thermoplastischem Material im Wesentlichen den gesamten Oberflächenbereich des Basiselements (2) abdeckt.

11. Orales Instrument (1) nach Anspruch 9, **dadurch gekennzeichnet, dass** die Schicht aus thermoplastischem Material eine oder mehrere Öffnungen definiert, die wenigstens einem oder mehreren der in dem Basiselement definierten Luftkanäle entsprechen.

12. Orales Instrument (1) nach Anspruch 9, **dadurch gekennzeichnet, dass** sich die Schicht aus thermoplastischem Material über die eine oder die mehreren Öffnungen, die dem wenigstens einem oder den mehreren Kanälen entsprechen, die im Basiselement angeordnet sind, erstreckt und diese abdeckt, um den Innenraum, der durch die Kanäle definiert ist, zu verschließen.

13. Orales Instrument (1) nach Anspruch 9, **dadurch gekennzeichnet, dass** die Schicht aus thermoplastischem Material EVA (Ethylvinylacetat) ist, das bei einer Temperatur von 90 °C bis 95 °C erweicht.

14. Orales Instrument (1) nach Anspruch 9, **dadurch gekennzeichnet, dass** die Schicht aus thermoplastischem Material, die die Zahneingriffelemente (3, 4) bildet, eine Dicke im Bereich von 1 mm bis 3 mm hat.

15. Orales Instrument (1) nach Anspruch 1, **dadurch gekennzeichnet, dass** das nicht thermoplastische Material Polyethylen, Polyurethan, Polypropylen oder Santoprin enthält.

16. Orales Instrument (1) nach Anspruch 1, **dadurch gekennzeichnet, dass** das Basiselement (2) 3 bis 8 Gew.-% eines thermoplastischen Materials, das EVA ist, und als Rest Polyethylen enthält.

17. Orales Instrument (1) nach Anspruch 1, **dadurch gekennzeichnet, dass** das Basiselement (2) 4 bis 6 Gew.-% eines thermoplastischen Materials, das EVA ist, und als Rest Polyethylen enthält.

18. Orales Instrument (1) nach Anspruch 1, **dadurch gekennzeichnet, dass** das nicht thermoplastische Material seinerseits Polyethylen enthält.

19. Orales Instrument (1) nach Anspruch 1, **dadurch gekennzeichnet, dass** das Basiselement (2) einen inneren Flansch (6) und einen äußeren Flansch (7) besitzt, die durch eine Bahn (5) miteinander verbunden sind und gemeinsam obere und untere Kanäle definieren, in denen obere und untere Reihen von Zähnen des Benutzers aufgenommen werden können, wobei ein oberes Zahneingriffelement (3) im oberen Kanal aufgenommen werden kann und ein unteres Zahneingriffelement (4) im unteren Kanal aufgenommen werden kann.

20. Orales Instrument (1) nach Anspruch 1, **dadurch gekennzeichnet, dass** es ferner einen Zungenansatz (25) am inneren Flansch (6) des Basiselements besitzt, wobei der Zungenansatz (25) im Wesentlichen mittig positioniert ist, um die Zunge eines Benutzers während des Gebrauchs korrekt zu positionieren, und einen Ausschnitt (35) besitzt, der im äußeren Flansch (7) des Basiselements (2) definiert ist, um dem Instrument (1) zu ermöglichen, sich an unterschiedliche Bogengrößen anzupassen, und Atmungsöffnungen besitzt, die im Basiselement (2) definiert sind, um das Atmen eines Benutzers während des Tragens des Instruments zu erleichtern.

21. Orales Instrument (1) nach Anspruch 1, **dadurch gekennzeichnet, dass** es ferner Lokalisierungsmittel umfasst, um die Kiefer im Zahneingriffelement (3, 4) während des Einsetzens des oralen Instruments korrekt zu lokalisieren und zu positionieren.

22. Orales Instrument (1) nach Anspruch 21, **dadurch gekennzeichnet, dass** die Lokalisierungsmittel eine Spange (54) aufweisen, die außerhalb des Zahneingriffelements (3, 4) angeordnet ist.

23. Orales Instrument nach Anspruch 22, **dadurch gekennzeichnet, dass** die Spange (54) Gummi aufweist.

24. Orales Instrument (1) nach Anspruch 1, **dadurch gekennzeichnet, dass** das Basiselement (2) aus Polyethylen mit weniger als 10 Gew.-% eines thermoplastischen Materials hergestellt ist und das Zahneingriffelement (3, 4) aus einem thermoplastischen Material hergestellt ist.

25. Orales Instrument (1) nach Anspruch 24, **dadurch gekennzeichnet, dass** das Basiselement (2) aus Polyethylen mit 3 bis 8 Gew.-% eines thermoplastischen Materials hergestellt ist.

26. Orales Instrument (1) nach Anspruch 25, **dadurch gekennzeichnet, dass** das Basiselement (2) aus Polyethylen mit 4 bis 6 Gew.-% eines thermoplastischen Materials hergestellt ist.

27. Orales Instrument (1) nach Anspruch 1, **dadurch gekennzeichnet, dass** das Basiselement (2) aus Polyethylen mit hoher Dichte mit 4 bis 6 Gew.-% eines thermoplastischen Materials, das EVA ist, hergestellt ist und jedes Zahneingriffelement (3, 4) aus EVA hergestellt ist.

28. Orales Instrument (1) nach Anspruch 1, **dadurch gekennzeichnet, dass** das Basiselement (2) nur einen oberen Kanal definiert, in dem obere Zähne eines Benutzers aufgenommen sind.

29. Orales Instrument (1) nach Anspruch 1 in Form eines Schutzes für die Anordnung im Mund eines Benutzers, um eine Schutzfunktion auszuführen, **dadurch gekennzeichnet, dass** das Basiselement (2) einen inneren Flansch (6) und einen äußeren Flansch (7) aufweist, die durch eine Bahn (5) verbunden sind und zusammen den wenigstens einen oberen Kanal definieren, in dem der Oberkiefer eines Benutzers so aufgenommen werden kann, dass sich ein vorderer Bereich über zwei Arme zu einem hinteren Ende nach hinten erstreckt, und das Stoßabsorptionsmittel, das wenigstens eine seitliche Öffnung (50) aufweist, die im äußeren Flansch jedes Arms definiert ist, und eine vordere Öffnung (52) aufweist, die im äußeren Flansch des vorderen Bereichs definiert ist, umfasst.

30. Orales Instrument (1) nach Anspruch 29, **dadurch gekennzeichnet, dass** das Basiselement (2) nur einen oberen Kanal definiert, der über den oberen Gaumenbogen des Benutzers passt.

31. Orales Instrument (1) nach Anspruch 29, **dadurch gekennzeichnet, dass** der äußere Flansch (7) eine Verlängerung nach unten oder eine Schürze umfasst, die sich von der Bahn (5) in einer Richtung weg von dem oberen Kanal nach unten erstreckt, und die seitlichen Öffnungen (50) in dem äußeren Flansch in dem Flansch oder in der Schürze unterhalb der Bahn definiert sind.

32. Orales Instrument (1) nach Anspruch 29, **dadurch gekennzeichnet, dass** auch die vordere Öffnung (52) in dem äußeren Flansch (7) unterhalb der Bahn (5) definiert ist.

33. Orales Instrument (1) nach Anspruch 29, wobei sowohl die seitlichen Öffnungen (50) als auch die vorderen Öffnungen (52) länglich sind, wobei die Längsachse der Öffnung zu dem oberen Kanal im Wesentlichen parallel ist.

34. Verfahren zum Einsetzen eines oralen Instruments nach Anspruch 1, das umfasst: den Schritt des Eintauchens des oralen Instruments in Wasser, dessen Temperatur ausreichend hoch ist, um das Zahneingriffelement formbar zu machen,
- Einsetzen des Instruments in den Mund eines Benutzers;
- Beißen in das Zahneingriffelement, um das Zahneingriffelement gemäß der Form des Kiefers des Benutzers zu formen, und danach des Zulassens des Härtens des Zahneingriffelements.

## Revendications

1. Appareil buccal (1) à placer dans la bouche d'un utilisateur, l'appareil comprenant:
- un élément de base (2) constitué d'une matière plastique rigide qui ne peut pas être conformée ou moulée à l'eau bouillante sur l'utilisateur, présentant une forme généralement en U correspondant au contour d'une mâchoire d'un utilisateur, l'élément de base (2) définissant au moins un canal (10) apte à recevoir une rangée supérieure ou inférieure de dents d'un utilisateur,
- un élément d'engagement de dents (3, 4), associé à chaque canal, fabriqué en une matière apte à être conformée ou moulée sur l'utilisateur afin d'épouser la bouche individuelle de l'utilisateur, dans lequel l'élément de base présente une plus grande rigidité que l'élément d'engagement de dents, et
- un moyen d'absorption des chocs, qui comprend un ou plusieurs canaux d'air ou d'espaces (50) définis dans l'élément de base afin de procurer des zones compressibles ou des zones élastiquement déformables qui sont aptes à absorber le choc d'un impact,
**caractérisé en ce que** la matière plastique rigide comprend une matière non thermoplastique en combinaison avec une matière thermoplastique et la matière thermoplastique représente 10 % en poids ou moins de l'élément de base.

2. Appareil buccal (1) selon la revendication 1, **caractérisé en ce que** le moyen d'absorption des chocs comprend un ou plusieurs canaux d'air ouverts définis dans l'élément de base.

3. Appareil buccal (1) selon la revendication 1, **caractérisé en ce que** les canaux d'air s'étendent depuis une face extérieure de l'élément de base, à travers le corps de celui-ci jusqu'à une face intérieure de l'élément de base.

4. Appareil buccal (1) selon la revendication 3, **caractérisé en ce que** les canaux présentent des côtés ouverts et sont agencés dans ou près d'extrémités terminales de la forme générale en U de l'élément de base (2).

5. Appareil buccal (1) selon la revendication 4, **caractérisé en ce qu'**il comprend en outre au moins un canal ouvert frontal (52) agencé dans une section frontale de l'élément de base (2).

6. Appareil buccal (1) selon la revendication 4, **caractérisé en ce que** les canaux ouverts latéraux (50) présentent une hauteur de l'ordre de 0,5 - 10 mm et une longueur comprise dans la plage de 0,5 à 30 mm.

7. Appareil buccal (1) selon la revendication 6, **caractérisé en ce que** les canaux ouverts latéraux (50) qui sont positionnés à proximité des extrémités terminales de la forme générale en U de l'élément de base ont une longueur comprise dans la plage de 10 à 20 mm.

8. Appareil buccal selon la revendication 5, **caractérisé en ce que** le canal ouvert frontal (52) de l'élément de base a une longueur comprise dans la plage de 2 à 10 mm.

9. Appareil buccal (1) selon la revendication 1, **caractérisé en ce que** l'élément d'engagement de dents (3, 4) est constitué d'une couche continue de matière thermoplastique qui enveloppe l'élément de base (2) afin de monter de façon ferme et sûre la couche de matière thermoplastique sur l'élément de base (2).

10. Appareil buccal (1) selon la revendication 9, **caractérisé en ce que** la couche continue de matière thermoplastique recouvre substantiellement la totalité de la surface de l'élément de base (2).

11. Appareil buccal (1) selon la revendication 9, **caractérisé en ce que** la couche de matière thermoplastique définit une ou plusieurs ouvertures qui correspondent à au moins un ou plusieurs des canaux d'air définis dans l'élément de base.

12. Appareil buccal (1) selon la revendication 9, **caractérisé en ce que** la couche de matière thermoplastique s'étend en travers de et couvre la ou les plusieurs ouvertures qui correspondent audit au moins un ou plusieurs canaux d'air agencés dans l'élément de base et ferme l'espace intérieur défini par les canaux.

13. Appareil buccal (1) selon la revendication 9, **caractérisé en ce que** la couche de matière thermoplastique est en EVA (éthylène-acétate de vinyle), qui se ramollit à une température de 90°C-95°C.

14. Appareil buccal (1) selon la revendication 9, **caractérisé en ce que** la couche de matière thermoplastique formant les éléments d'engagement de dents (3, 4) a une épaisseur de 1 mm - 3 mm.

15. Appareil buccal (1) selon la revendication 1, **caractérisé en ce que** la matière non thermoplastique comprend le polyéthylène, le polyuréthane, le polypropylène ou la santoprine.

16. Appareil buccal (1) selon la revendication 1, **caractérisé en ce que** l'élément de base (2) comprend 3-8 % en poids de matière thermoplastique qui est l'EVA et le reste est du polyéthylène.

17. Appareil buccal (1) selon la revendication 1, **caractérisé en ce que** l'élément de base (2) comprend 4-6 % en poids de matière thermoplastique qui est l'EVA et le reste est du polyéthylène.

18. Appareil buccal (1) selon la revendication 1, **caractérisé en ce que** la matière non thermoplastique comprend du polyéthylène uniquement.

19. Appareil buccal (1) selon la revendication 1, **caractérisé en ce que** l'élément de base (2) comporte des brides intérieure (6) et extérieure (7) reliées par une âme (5), qui définissent ensemble des canaux supérieur et inférieur à l'intérieur desquels les rangées supérieure et inférieure de dents de l'utilisateur peuvent être logées, dans lequel un élément d'engagement de dents supérieur (3) peut être logé dans le canal supérieur et un élément d'engagement de dents inférieur (4) peut être logé dans le canal inférieur.

20. Appareil buccal (1) selon la revendication 1, **caractérisé en ce qu'**il comprend en outre une patte linguale (25) sur la bride intérieure (6) de l'élément de base, la patte linguale (25) étant positionnée sensiblement au centre afin de positionner correctement la langue d'un utilisateur pendant l'utilisation, et une découpe (35) définie dans la bride extérieure (7) de l'élément de base (2) pour permettre à l'appareil (1) de s'adapter à des tailles d'arcade variables, et des orifices de respiration définis dans l'élément de base (2) pour faciliter la respiration par un utilisateur lorsqu'il porte l'appareil.

21. Appareil buccal (1) selon la revendication 1, **caractérisé en ce qu'**il comprend en outre des moyens de localisation destinés à localiser et à positionner correctement les mâchoires dans l'élément d'engagement de dents (3, 4) pendant l'ajustement de l'appareil buccal.

22. Appareil buccal (1) selon la revendication 21, **caractérisé en ce que** les moyens de localisation comprennent une armature (54) agencée extérieurement sur l'élément d'engagement de dents (3, 4).

23. Appareil buccal selon la revendication 22, **caractérisé en ce que** l'armature (54) comprend du caoutchouc.

24. Appareil buccal (1) selon la revendication 1, **caractérisé en ce que** l'élément de base (2) est fabriqué en polyéthylène avec moins de 10 % en poids d'une matière thermoplastique et l'élément d'engagement de dents (3, 4) est fabriqué en une matière thermoplastique.

25. Appareil buccal (1) selon la revendication 24, **caractérisé en ce que** l'élément de base (2) est fabriqué en polyéthylène avec 3-8 % en poids de matière thermoplastique.

26. Appareil buccal (1) selon la revendication 25, **caractérisé en ce que** l'élément de base (2) est fabriqué en polyéthylène avec 4-6 % en poids de matière thermoplastique.

27. Appareil buccal (1) selon la revendication 1, **caractérisé en ce que** l'élément de base (2) est fabriqué en polyéthylène haute densité avec 4-6 % en poids de matière thermoplastique qui est l'EVA et chaque élément d'engagement de dents (3, 4) est fabriqué en EVA.

28. Appareil buccal (1) selon la revendication 1, **caractérisé en ce que** l'élément de base (2) définit uniquement un canal supérieur apte à recevoir les dents supérieures d'un utilisateur.

29. Appareil buccal (1) selon la revendication 1 sous la forme d'un garant à placer dans la bouche d'un utilisateur pour assurer une fonction de protection, **caractérisé en ce que** l'élément de base (2) comporte une bride intérieure (6) et une bride extérieure (7) reliées par une âme (5), qui définissent ensemble ledit au moins un canal supérieur apte à recevoir la mâchoire supérieure d'un utilisateur avec une région frontale qui s'étend vers l'arrière via deux bras jusqu'à une extrémité arrière, et le moyen d'absorption des chocs comprend au moins une ouverture latérale (50) définie dans la bride extérieure de chacun desdits bras et une ouverture frontale (52) définie dans la bride extérieure de la région frontale.

30. Appareil buccal (1) selon la revendication 29, **caractérisé en ce que** l'élément de base (2) définit uniquement ledit un canal supérieur apte à s'ajuster sur l'arcade supérieure de l'utilisateur.

31. Appareil buccal (1) selon la revendication 29, **caractérisé en ce que** la bride extérieure (7) comprend une extension inférieure ou une jupe qui s'étend vers le bas à partir de l'âme (5) dans une direction s'écartant du canal supérieur et les ouvertures latérales (50) sont définies dans la bride extérieure dans la bride ou la jupe en dessous de l'âme.

32. Appareil buccal (1) selon la revendication 29, **caractérisé en ce que** l'ouverture frontale (52) est
également définie dans la bride extérieure (7) en dessous de l'âme (5).

33. Appareil buccal (1) selon la revendication 29, dans lequel chacune des ouvertures latérales (50) et frontale (52) est allongée, avec l'axe longitudinal de l'ouverture sensiblement parallèle au canal supérieur.

34. Procédé pour ajuster un appareil buccal selon la revendication 1, comprenant l'étape d'immersion de l'appareil buccal dans une eau présentant une température suffisamment élevée pour que l'élément d'engagement de dents puisse être moulé,
- d'insertion de l'appareil dans la bouche de l'utilisateur, et
- de morsure dans l'élément d'engagement de dents afin de mouler l'élément d'engagement de dents à la forme de la mâchoire de l'utilisateur, et de permettre ensuite à l'élément d'engagement de dents de durcir.
